# EUROPÄISCHE PATENTSCHRIFT

(11) **EP 2 529 993 B1**
(45) Veröffentlichungstag und Bekanntmachung des Hinweises auf die Patenterteilung: **16.09.2015**
(21) Anmeldenummer: 12003442.6
(22) Anmeldetag: 04.05.2012
(51) Int. Cl.: B60W 30/14, B60W 30/18

(54) **Kraftfahrzeug umfassend ein Fahrerassistenzsystem mit einer Steuerungseinrichtung zur automatischen Längsführung**
Motor vehicle with a driver assistance system with a control device for automatic longitudinal guidance
Véhicule automobile comprenant un système d'assistance au conducteur avec un dispositif de commande pour guidage longitudinal automatique

(30) Priorität: 01.06.2011 DE 102011103096
(43) Veröffentlichungstag der Anmeldung: 05.12.2012
(73) Patentinhaber: Audi AG, 85045 Ingolstadt (DE)
(72) Erfinder: Brunner, Karl-Heinz, 85049 Ingolstadt (DE)
(74) Vertreter: Thielmann, Frank

(56) Entgegenhaltungen:
- EP-A1- 2 476 597
- EP-A2- 1 923 291
- DE-A1- 10 345 319
- DE-A1-102007 031 238
- DE-A1-102008 023 135
- GB-A- 2 452 579
- US-A1- 2010 292 904

## Beschreibung

Die Erfindung betrifft ein Kraftfahrzeug, umfassend ein Fahrerassistenzsystem mit einer Steuerungseinrichtung zur automatischen Längsführung des Kraftfahrzeugs, ein Navigationssystem umfassend ein Speichermittel mit Streckendaten und Streckenattributen, ein Positionsbestimmungssystem zur Ermittlung der geografischen Fahrzeugposition, sowie einen oder mehrere fahrzeugseitig vorgesehene Aktuatoren, die über die Steuerungseinrichtung im Rahmen der Längsführung direkt oder indirekt ansteuerbar sind.

US 2010/292904 A1 offenbart ein Kraftfahrzeug dieser Art.

Moderne Kraftfahrzeuge verfügen neben den schon fast standardmäßig verbauten Navigationssystemen und Positionsbestimmungssystemen mitunter auch über ein Fahrerassistenzsystem, das der automatischen Längsführung des Kraftfahrzeugs dient. Über das Fahrerassistenzsystem, häufig auch ACC-System (ACC = adaptive cruise control), bzw. seine Steuerungseinrichtung werden in Abhängigkeit der erfassten Situation verschiedene fahrzeugseitig vorgesehene Aktuatoren angesteuert, um bestimmte Fahrmanöver automatisiert, also ohne Fahrereingriff vorzunehmen, die der gegebenen Situation angepasst sind respektive aus dieser resultierend im Rahmen der Längsführung oder Längsregelung steuerungseinrichtungsseitig ermittelt wurden. Als Aktuatoren können beispielsweise die Bremsen des Bremssystems angesteuert werden, wie auch der Motor selbst, der je nach gegebener Situation beispielsweise im Rahmen einer Abstandshaltung zu einem vorausfahrenden Fahrzeug angesteuert wird.

Es ist ferner bekannt, unter Verwendung eines solchen Fahrerassistenzsystems eine energie- oder verbrauchseffiziente bzw. auf einen möglichst niedrigen Energieverbrauch abzielende Längsführung bzw. Längsregelung vorzunehmen, um also durch eine automatische Längsführung einen möglichst niedrigen Energieverbrauch zu realisieren. Eine solche Regelstrategie sieht dabei die Nutzung energieeffizienter Fahrmanöver wie einem Ausrollen im Leerlauf (Leerlaufsegeln), die Nutzung der Schubabschaltung (MotorSchiebebetrieb) sowie die Kombination beider Manöver, gegebenenfalls auch zusammen mit der Ansteuerung des Bremssystems, vor. Die Grundlage hierfür sind Informationen betreffend die vor dem Fahrzeug liegende Fahrstrecke. Für die Funktion einer solchen energieeffizienten Längsführung ist es deshalb erforderlich, seitens des Navigationssystems ein Fahrziel zu definieren, mithin also eine bis zum Fahrziel definierte Fahrstrecke vorab zu bestimmen und die hierzu im Speichermittel ebenfalls hinterlegten Streckenattribute, die für eine energieeffiziente, verbrauchsarme Regelung relevant sind respektive einen Informationsgehalt haben, der diesbezüglich verwertet werden kann, zu erfassen. Die Regelstrategie arbeitet derart, dass über das Positionsbestimmungssystem kontinuierlich die Ist-Position des Fahrzeugs erfasst wird. Ausgehend hiervon werden innerhalb der vorbestimmten, im Navigationssystem definierten Start-Ziel-Fahrstrecke die unmittelbar voraus liegenden regelrelevanten Streckenattribute wie beispielsweise Geschwindigkeitsbegrenzungen (Tempolimitschilder), Kurven oder topografische Eigenschaften (Gefälle, Steigung) erfasst, wie auch deren geografische Position, so dass stets bekannt ist, welche Relativposition das Fahrzeug und das Streckenattribut zueinander haben. Die Steuerungseinrichtung des Fahrerassistenzsystems, die diese Erfassung respektive Auswertung letztlich vornimmt, ist nun in der Lage, eine entsprechende Regelstrategie zu errechnen, beispielsweise ausgehend von der gegebenen Ist-Geschwindigkeit eine entsprechende Ausrollstrecke zu ermitteln, die erforderlich ist, dass das Fahrzeug im Leerlauf ausrollt und mit Erreichen des Streckenattributs, hier also eines Tempolimitsschilds, die vorgegebenen Geschwindigkeit erreicht, wie auch den Zeitpunkt respektive Ort des Beginns des Ausrollvorgangs. In ähnlicher Weise kann auch in den Leerlaufsegelbetrieb respektive den Motorschiebebetrieb geschaltet werden, wenn ein Gefälle ansteht und Ähnliches.

Voraussetzung ist stets, dass im Navigationssystem ein Fahrtziel festgelegt wurde, mithin also gleichzeitig auch eine Navigationsführung gegeben ist. Nicht immer jedoch ist eine Navigationsführung gewünscht oder erforderlich.

Der Erfindung liegt damit das Problem zugrunde, ein Kraftfahrzeug anzugeben, das demgegenüber verbessert ist.

Zur Lösung dieses Problems ist bei einem Kraftfahrzeug der eingangs genannten Art erfindungsgemäß vorgesehen, dass die Steuerungseinrichtung zur prädikativen Ermittlung eines vor dem Kraftfahrzeug liegenden Streckenabschnitts, der vom Kraftfahrzeug wahrscheinlich befahren wird, anhand der ermittelten momentanen Fahrzeugposition und positionsabhängig bestimmten Streckendaten und zur Steuerung eines oder mehrerer Aktuatoren in Abhängigkeit wenigstens eines dem ermittelten Streckenabschnitt zugeordneten, in seiner geografischen Position erfassbaren Streckenattribut ausgebildet ist, wobei bei Vorliegen mehrerer möglicher verschiedener Streckenabschnitte die Steuereinrichtung zur Priorisierung der Streckenabschnitte ausgebildet ist.

Das erfindungsgemäße Kraftfahrzeug ermöglicht mit besonderem Vorteil die Ausnutzung energieeffizienter Fahrmanöver auch auf Routen, die nicht über ein Fahrtziel im Navigationssystem definiert sind. Erfindungsgemäß vorgesehen ist hierzu, dass die Steuerungseinrichtung prädikativ einen mit hoher Wahrscheinlichkeit vom Fahrzeug befahrenen, vor dem Fahrzeug liegenden Streckenabschnitt ermittelt, also eine wahrscheinliche Fahrstrecke voraussagt. Hierzu ist eine fortwährende Bestimmung der aktuellen geografischen Fahrzeugposition über das Positionsbestimmungssystem erforderlich, auf welche gestützt die Streckenabschnittsermittlung erfolgt. Hierzu werden die im Navigationssystemspeichermittel ohnehin fahrzeugseitig abgelegten Streckendaten, also Informationen über Fahrwege respektive Straßen, deren Verlauf etc., ausgewertet und ein Streckenabschnitt ermittelt, von dem mit hoher Wahrscheinlichkeit anzunehmen ist, dass das Fahrzeug ihn befährt. Dieser Streckenabschnitt, der gegebenenfalls in definierte Segmenten unterteilt sein kann, wird sodann der Ermittlung eines oder mehrerer Abschnitte zugeordneter Streckenattribute zu Grunde gelegt. Als Streckenattribute sind solche abschnittsbezogenen Steckeninformationen zu verstehen, die in irgendeiner Weise geeignet sind, als Grundlage für eine energieeffiziente Regelstrategie verwendet zu werden. Streckenattribute sind beispielsweise Geschwindigkeitsvorgaben, also Geschwindigkeitsgebotsschilder, Informationen über Straßenklassen, beispielsweise Autobahn, Kraftfahrstraße oder Landstraße, denen jeweils unterschiedliche Geschwindigkeitsvorgaben zugeordnet sind, Fahrbahnkurven nebst Informationen über deren Krümmungsradius (also scharfe oder weniger scharfe Kurven) wie auch topografische Informationen bezüglich Gefälle, Steigungen und Ebenen. Attribute sind also Regelungsobjekte, bezüglich welcher die Steuerung der Aktuatoren erfolgt. Streckendaten sind allgemeine Informationen zu allen möglichen Fahrwegen, also die digitale Karte selbst, wobei nicht ausgeschlossen ist, dass auch ein Streckendatum, insbesondere in Bezug auf Informationen über Kurven und deren Krümmungsradien, ein Streckenattribut sein kann. Als Aktuatoren können alle Bauteile respektive Systeme verwendet und angesteuert werden, die in irgendeiner Weise in eine energieeffiziente Regelung eingebunden werden können, vornehmlich das Motorsystem und das Bremssystem, gegebenenfalls aber auch das Getriebe.

Die Erfindung ermöglicht also eine vorausschauende Längsregelung durch nutzungsverbrauchseffiziente Fahrmanöver auch bei inaktiver Zielführung, indem eine Fahrstreckenvorschau auf Grundlage eines prädizierten Pfades, also Fahrwegs, gewonnen wird, den der Fahrer mit hoher Wahrscheinlichkeit befahren wird. Zur Generierung dieses Voraussagehorizonts wird unter Nutzung der Positionserfassung, also in der Regel der Signale eines GPS (GPS = global positioning system), zunächst innerhalb der Streckendaten, also der segmentierten digitalen Karte, das Fahrwegsegment bestimmt, auf dem sich das Fahrzeug aktuell befindet. Anschließend wird, gegebenenfalls unter Zugrundelegung einer Priorisierung mögliche Routen, der relevante Streckenabschnitt und die zugeordneten Streckenattribute bestimmt. Denkbar ist hier, dass eine Priorisierung möglicher Streckenabschnitte, so aufgrund der Straßenführung (Abzweigungen) mehrere Routen möglich sind, über die Streckenattribute "Straßenklasse" (also Autobahn, Landstraße oder Kraftfahrstraße), "Vorfahrtsstraße" sowie über den Abzweigewinkel zweier möglicher Routen voneinander vorgenommen. Dabei wird davon ausgegangen, dass der Fahrer mit hoher Wahrscheinlichkeit auf Vorfahrtsstraßen fahren wird bzw. eine Fahrt mit kleinem Abzweigewinkel bevorzugt, welche mit höherer Geschwindigkeit befahren werden kann, als ein Segment, das einen größeren Abzweigewinkel aufweist und demnach mit einer niedrigen Geschwindigkeit befahren werden muss. Aufgrund der kontinuierlichen Positionserfassung wie auch der Einbeziehung etwaiger Fahrertätigkeiten, beispielsweise der Betätigung eines Blinkers, ist in jedem Fall eine umgehende Änderungserfassung möglich, wenn also der Fahrer vom prädizierten wahrscheinlichsten Pfad abweicht. In diesem Fall erfolgt eine umgehende Aktualisierung des Pfades, wiederum unter Zugrundelegung der genannten Kriterien.

Die Erzeugung respektive Bestimmung des wahrscheinlichsten befahrenen Streckenabschnitts erfolgt mittels eines prädiktiven "Baumes", der einen definierten Bereich des vorausliegenden Streckenverlaufs in Form einer "Baumstruktur" abbildet. Dazu wird über einen geeigneten Berechnungsalgorithmus, der entweder in der Steuerungseinrichtung der Navigationseinrichtung oder der des Fahrerassistenzsystems hinterlegt ist, beispielsweise der Streckenverlauf vor der aktuellen Fahrzeugposition inklusive möglicher Abzweigungen in Segmente variabler Länge unterteilt. Als Segmenttrenner dienen Streckenattribute wie Geschwindigkeitsbeschränkungen, Straßenklasse sowie Änderungen in der Krümmungsinformation zweier aufeinanderfolgender Segmente und Ähnliches. Der maximal mögliche Voraussagehorizont, also die maximale Länge des prädiktiv bestimmbaren Streckenabschnitts ist davon abhängig, wie viele Segmente zum Aufbau des prädiktiven "Baumes" intern in der Steuerungseinrichtung abgespeichert werden können. Eine maximale Streckenabschnittslänge kann beispielsweise 250 m betragen.

Wie bereits beschrieben, ist ein der Steuerung zugrunde legbares Streckenattribut eine Geschwindigkeitsvorgabe, eine Fahrbahnkurve und deren Krümmungsverlauf, und/oder eine topografische Fahrbahninformation. Diese Informationen sind allesamt navigationseinrichtungsseitig vorhanden, auf sie kann nach Erfassung der Fahrzeugposition und Auswahl der gerade befahrenen Strecke sofort zugegriffen werden.

Im Rahmen der Regelung respektive Längsführung ist die Steuerungseinrichtung zweckmäßigerweise zur Steuerung des oder der Aktuatoren unter Berücksichtigung wenigstens eines aktuellen Betriebsparameters des Kraftfahrzeugs ausgebildet, üblicherweise der Fahrzeug-Ist-Geschwindigkeit, gegebenenfalls aber auch anderer Informationen wie beispielsweise dem Ladezustand des Fahrzeugs (Vollbeladen, Leer, Anhänger) und Ähnlichem. Steht beispielsweise als Regelgrundlage ein Streckenattribut "Geschwindigkeitsbeschränkung" an, so wird zunächst ein Vergleich der Fahrzeug-Ist-Geschwindigkeit mit der über das Geschwindigkeitsgebot vorgegebenen, steuerungseinrichtungsseitig selbstverständlich bekannten Soll-Geschwindigkeit vorgenommen, mithin also die Geschwindigkeitsdifferenz ermittelt, um die das Fahrzeug zu verzögern ist, woraufhin unter Berücksichtigung der grundlegenden energieeffizienten Regelstrategie der Zeitpunkt ermittelt wird, ab welchem beispielsweise in den Leerlaufsegelbetrieb oder den Schubbetrieb umgeschaltet wird und Ähnliches.

Bei einer zweckmäßigen Weiterbildung der Erfindung kann eine Kamera und/oder können ein oder mehrere Bereichsensoren oder Radarsensoren vorgesehen sein, wobei die Steuerungseinrichtung zur Plausibilisierung der erfassten geografischen Position eines der Steuerung zugrunde zu legenden Streckenattributs und/oder Plausibilisierung des Streckenattributs selbst und/oder der Erfassung eines weiteren Streckenattributs anhand der von der Kamera gelieferten Bilder und/oder der von dem oder den Bereichssensoren gelieferten Informationen ausgebildet ist. Die Steuerungseinrichtung ist gemäß dieser Erfindungsausgestaltung also in der Lage, die kontinuierlich gelieferten Kamerabilder und/oder die kontinuierlich gelieferten Sensorsignale auszuwerten. Werden beispielsweise Kamerabilder ausgewertet, so kann über einen geeigneten Bildverarbeitungsalgorithmus im Kamerabild ein Streckenattribut wie beispielsweise ein Geschwindigkeitsgebotsschild ermittelt werden. Dieses im Kamerabild ermittelte Streckenattribut ist üblicherweise auch als Streckenattribut in dem Navigations-Speichermittel abgelegt, so dass also eine Plausibilisierung des Navigations-Streckenattributs möglich ist, wie auch eine Plausibilisierung der dortseits abgelegten Positionsinformation. Denkbar ist es aber auch, aus den Kamerabildern/Sensorsignalen ein Streckenattribut zu ermitteln, das in den Navigations-Speicherdaten nicht enthalten ist, beispielsweise weil die Navigations-Speicherdaten nicht aktuell sind, oder weil temporäre Baumaßnahmen mit entsprechenden Geschwindigkeitsbeschränkungen durchgeführt werden und Ähnliches. Die Steuerungseinrichtung kann also hierüber die Ist-Situation erfassen, die gegebenenfalls von der "Soll-Situation", wie sie navigationseinrichtungsseitig über die Daten definiert ist, abweicht, und der nachfolgenden Regelung zugrunde legen. Beispielsweise kann der hinterlegte Krümmungsradius überprüft werden, denkbar ist auch, eine hinterlegte Geschwindigkeitsvorgabe durch Ermittlung eines im Bild gezeigten Schilds zur Plausibilisierung und Ähnliches. Grundsätzlich kann hierüber also ein bereits eingeleitetes Fahrmanöver entweder korrigiert werden oder ein erforderliches Fahrmanöver überhaupt erst eingeleitet werden.

Die energieeffiziente Regelstrategie wird vornehmlich darin bestehen, durch geeignete Umschaltung auf ein Ausrollen im Leerlauf oder eine Nutzung der Schubabschaltung verbrauchseffizient zu fahren. Wie beschrieben ist hier die Steuerungseinrichtung zweckmäßig bei Ermittlung einer anstehenden Geschwindigkeitsverringerung oder eines Gefälles zur Bestimmung einer Ausrolldistanz und zur Ermittlung des Zeitpunktes des Beginns des Steuerungseingriffs ausgebildet. Diese Ermittlung erfolgt anhand fahrzeugrelevanter Daten wie der Ist-Geschwindigkeit, aber auch unter Berücksichtigung von Motorparametern, dem Motorverlustmoment, dem Motorschleppmoment sowie aktueller Fahrwiderstände (Luft-, Roll-, Steigungs-, Beschleunigungswiderstände), wie auch Informationen über die gegebene Topographie, beispielsweise wenn eine Geschwindigkeitsverringerung im Bereich eines Gefälles gegeben ist oder Ähnliches.

Das erfindungsgemäße Kraftfahrzeug lässt also mit besonderem Vorteil eine energie- bzw. verbrauchseffiziente automatische Längsführung auch dann zu, wenn kein Fahrziel über das Navigationssystem vorgegeben ist. Voraussetzung hierfür ist ein Fahrerassistenzsystem, das der Längsführung dient, das Vorhandensein eines Navigationssystems umfassend ein Speichermittel mit Streckendaten (digitale Straßenkarte) und Streckenattributen, das Vorhandensein eines Positionsbestimmungssystems auf GPS (zur geografischen Bestimmung der Fahrzeugposition), die Anbindung der Steuerungseinrichtung des Fahrerassistenzsystems an ein Fahrzeugbussystem, um fahrzeugrelevante Daten wie Motorparameter, Motorverluste, Motorschleppmomente, aktuelle Fahrwiderstände (Luft-, Roll-, Steigungs- Beschleunigungswiderstände), sowie Signale des Fahrtrichtungsanzeigers zu erfassen, ferner eine Anbindung an die Fahrzeugaktuatorik (Motor, Getriebe, Bremse) zur Umsetzung bzw. Korrektur der im Rahmen der Regelung einzuleitenden effizienten Fahrmanöver, nämlich Leerlaufsegel bzw. Motor-Schiebebetrieb, sowie (optional) die Nutzung eines kamerabasierten oder sensorbasierten Fahrzeugvorfelderfassungssystems, insbesondere eines kamerabasierten Verkehrszeichnerkennungssystems zur Plausibilisierung der geografischen Position und/oder des Inhalts von Streckenattributen, insbesondere von Geschwindigkeitsvorgabeschildern.

Neben dem Kraftfahrzeug betrifft die Erfindung ferner ein Verfahren zur Längsführung eines Kraftfahrzeugs umfassend ein Fahrerassistenzsystem mit einer Steuerungseinrichtung zur automatischen Längsführung des Kraftfahrzeugs, ein Navigationssystem umfassend ein Speichermittel mit Streckendaten und Streckenattributen, ein Positionsbestimmungssystem zur Ermittlung der geografischen Fahrzeugposition, sowie einen oder mehrere fahrzeugseitig vorgesehene Aktuatoren, die über die Steuerungseinrichtung im Rahmen der Längsführung direkt oder indirekt ansteuerbar sind, mit folgenden Schritten:
- Ermittlung der momentanen geografischen Fahrzeugposition,
- Ermittlung von Streckendaten in Abhängigkeit der Fahrzeugposition,
- Ermittlung eines wahrscheinlich befahrenen Streckenabschnitts anhand der Fahrzeugposition und der Streckendaten, wobei bei Vorliegen mehrerer möglicher verschiedener Streckenabschnitte die Steuereinrichtung zur Priorisierung der Streckenabschnitte ausgebildet ist,
- Ermittlung wenigstens eines dem Streckenabschnitt zugeordneten Streckenattributs sowie dessen geografischer Position in den Streckendaten, und
- Steuerung wenigstens eines Aktuators in Abhängigkeit des Informationsgehalts des Streckenattributs.

Im ersten Schritt wird die momentane geografische Position über das Positionsbestimmungssystem ermittelt. Die Positionsbestimmung kann dabei entweder in einer Steuerungseinrichtung des Positionsbestimmungssystems selbst vorgenommen werden, oder gestützt auf die Systeminformationen in der Steuerungseinrichtung des Fahrerassistenzsystems. Im zweiten Schritt wird sodann die Ermittlung von Streckendaten in Abhängigkeit der Fahrzeugposition vorgenommen. Dies kann in der Steuerungseinrichtung des Navigationssystems erfolgen, oder aber unter Rückgriff auf die navigationssystemseitig vorhandenen Streckendaten wiederum in der Steuerungseinrichtung des Fahrerassistenzsystems. Im dritten Schritt erfolgt die Ermittlung eines wahrscheinlich befahrenen Streckenabschnitts anhand der Fahrzeugpositionen der Streckendaten, was in der Steuerungseinrichtung des Fahrerassistenzsystems erfolgt. Sodann wird im vierten Schritt entweder in der Steuerungseinrichtung des Navigationssystems oder wiederum in der des Fahrerassistenzsystems unter Rückgriff auf die Navigationsdaten überprüft, ob dem Streckenabschnitt ein Streckenattribut zugeordnet ist, und, falls dem so ist, dessen geografische Position in den Streckendaten bestimmt. Sind nun sämtliche Informationen seitens der Fahrerassistenzsystem-Steuerungseinrichtung vorhanden, nimmt diese, wenn ein Streckenattribut gegeben ist, die Steuerung wenigstens eines Aktuators in Abhängigkeit des Informationsinhalts des Streckenattributs vor, d. h., dass das energieeffiziente Fahrmanöver sodann über die Steuerungseinrichtung des Fahrerassistenzsystems gesteuert wird.

Als ein der Steuerung zugrunde zu legendes Streckenattribut kann eine Geschwindigkeitsvorgabe, eine Fahrbahnkurve und deren Krümmungsverlauf und/oder eine topografische Fahrbahninformation ermittelt werden, wobei die Steuerung selbstverständlich in Abhängigkeit des jeweiligen Informationsgehalts erfolgt. Die Steuerungseinrichtung selbst kann ferner im Rahmen der Steuerung des oder der Aktuatoren wenigstens einen aktuellen Betriebsparameter der Kraftfahrzeugs berücksichtigen, beispielsweise die Ist-Geschwindigkeit, diverse Motorparameter, Fahrwiderstände und Ähnliches.

Ferner kann vorgesehen sein, dass mittels einer fahrzeugseitig vorgesehenen Kamera kontinuierlich Bilder des Fahrzeugvorfelds aufgenommen werden, und/oder dass mittels eines oder mehrerer fahrzeugseitig vorgesehener Bereichssensoren, insbesondere Radarsensoren, Informationen aus dem Fahrzeugvorfeld aufgenommen werden, wobei die Steuerungseinrichtung eine Plausibilisierung der erfassten geografischen Position eines der Steuerung zugrunde zu legenden Streckenattributs und/oder des Streckenattributs selbst anhand der Bilder und/oder Informationen vornimmt. Dabei kann ferner vorgesehen sein, dass bei Ermittlung eines nicht im Speichermedium abgelegten Streckenattributs, gegebenenfalls nach Durchführung einer Plausibilisierungsprüfung anhand bekannter Streckendaten und/oder Streckenattribute, die Steuerung in Abhängigkeit des neu erfassten Streckenattributs erfolgt. Ergibt beispielsweise eine Plausibilisierungsprüfung, dass das im Speicher abgelegte Streckenattribut nicht mit dem aktuell erfassten Streckenattribut übereinstimmt, dass sich beispielsweise die Geschwindigkeitsvorgabe geändert hat, so wird die aktuell erfasste Vorgabe der Steuerung zugrunde gelegt. Gegebenenfalls wird die gespeicherte Geschwindigkeitsvorgabe korrigiert. Denkbar ist es natürlich auch, beispielsweise aufgrund einer temporären Baustelle, eine Geschwindigkeitsbegrenzung gegeben ist, die in den Navigationsdaten nicht vorhanden ist. Auch diese kann erfasst werden und der nachfolgenden Steuerung zugrunde gelegt werden.

Die Steuerungseinrichtung selbst bestimmt zur Ermittlung des Streckenabschnitts zunächst innerhalb der in Streckensegmente unterteilten Streckendaten anhand der ersten momentanen Fahrzeugposition das Streckensegment, in dem sich das Fahrzeug momentan befindet, wonach nachfolgende Streckensegmente unter Berücksichtigung von Informationen betreffend den Streckenverlauf oder von Streckenattributen ermittelt und zu einem Streckenabschnitt verbunden werden. D. h., dass ein sich aus mehreren einander nachfolgenden Streckensegmenten ergebender Fahrweg oder "Baum" als wahrscheinlichster Streckenverlauf bestimmt wird, der jedoch soweit veränderbar ist, als natürlich eine kontinuierliche Anpassung an sich ändernde Umstände wie beispielsweise die Gabe einer Fahrtrichtungsänderung (Setzen eines Blinkers) oder eine aktive Abweichung von der prädizierten Fahrstrecke möglich ist.

Schließlich ermittelt die Steuerungseinrichtung bei Erfassung einer anstehenden Geschwindigkeitsverringerung oder eines Gefälles eine Ausrolldistanz und den Zeitpunkt des Beginns des Steuerungseingriffs, um die energieeffizienten Fahrmanöver zeitgerecht einleiten zu können.

Weitere Vorteile, Merkmale und Einzelheiten der Erfindung ergeben sich aus dem im Folgenden beschriebenen Ausführungsbeispiels sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung eines Beispiels zur Ermittlung eines wahrscheinlichen Streckenabschnitt,
- Fig. 3: ein Beispiel betreffend die aktuelle Anpassung des ermittelten Streckenabschnitts aus Fig. 2,
- Fig. 4: ein Flussdiagramm zur Erläuterung des Ablaufs einer Regelung auf ein relevantes Streckenattribut, und
- Fig. 5: ein Diagramm zur Darstellung des Ablaufs eines geregelten energieeffizienten Fahrmanövers im Leerlauf - bzw. Schiebebetrieb vor einer Geschwindigkeitsbeschränkung.

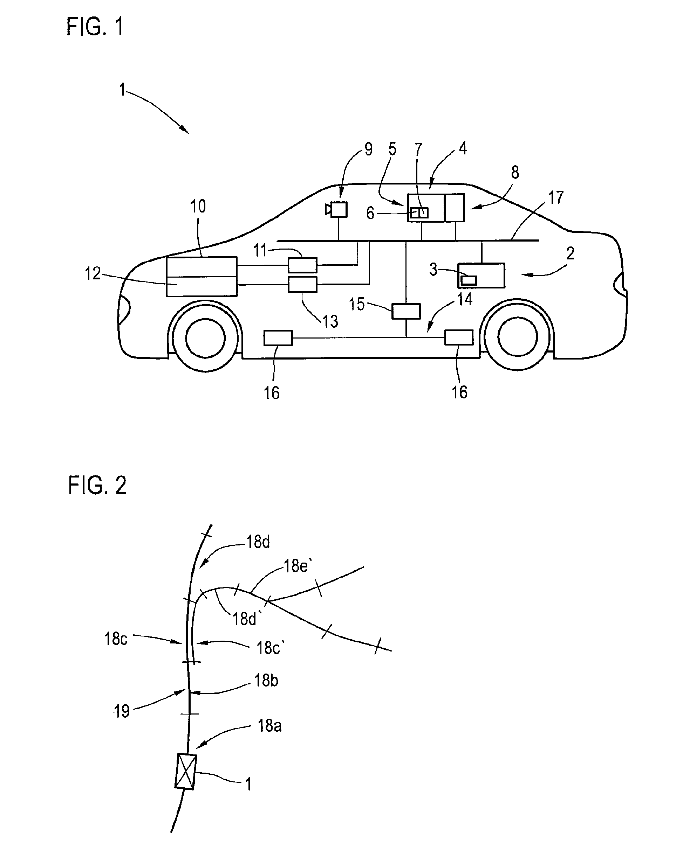

Fig. 1 zeigt ein erfindungsgemäßes Kraftfahrzeug 1, umfassend ein das Fahrzeug automatisch längsführendes Fahrerassistenzsystem 2, beispielsweise ein sogenanntes ACC-System, mit einer zugehörigen Steuerungseinrichtung 3. Das Fahrerassistenzsystem ist selbstverständlich über nicht näher gezeigtes Bedienelement zu- und abschaltbar.

Vorgesehen ist ferner ein Navigationssystem 4 mit einem Speichermittel 5, in dem Streckendaten 6 sowie Streckenattribute 7 in entsprechenden Dateien abgelegt sind. Dem Navigationssystem zugeordnet bzw. das Navigationssystem umfasst ferner ein Positionsbestimmungssystem 8 zur Ermittlung der aktuellen geografischen Fahrzeugposition, beispielsweise ein "global position system" (GPS).

Weiterhin vorgesehen ist eine Kamera 9, die kontinuierlich Bilder des Fahrzeugvorfelds aufnimmt. Daneben weist das Kraftfahrzeug in an sich bekannter Weise einen Motor 10 mit zugeordneter Motorsteuereinrichtung 11 sowie ein Getriebe 12 mit zugeordnetem Getriebesteuereinrichtung 13 auf. Vorgesehen ist ferner ein Bremssystem 14 mit zugeordneter Steuerungseinrichtung 15 und den jeweiligen Fahrzeugradbremsen 16. Sämtliche Systeme respektive Steuerungseinrichtungen kommunizieren respektive sind verbunden mit einem Fahrzeugbus 17, üblicherweise ein CAN-Bus, über den Daten ausgetauscht werden.

Das Fahrerassistenzsystem 2 ist bei dem erfindungsgemäßen Kraftfahrzeug 1 in der Lage, das Fahrzeug in bestimmten Situationen energieeffizient, also verbrauchssparend automatisch längs zu führen, indem es aktiv den Betrieb des Motors 10 und/oder des Getriebes 12 und/oder des Bremssystems 14 durch jeweilige Kommunikation mit den zugeordneten Steuereinrichtungen 11, 13, 15 steuert. Die Steuerung sieht vor, bei Bedarf den Motor 10 respektive das Getriebe so anzusteuern, dass es zu einem Leerlaufsegeln kommt, also zu einem Ausrollen im Leerlauf, und/oder zu einer Nutzung der Schubabschaltung, also der Motorbremse, wobei beide Eingriffsmöglichkeiten auch kumulativ vorgenommen werden können, eventuell auch zusammen mit einer Ansteuerung des Bremssystems 14. Die Ermittlung, ob ein solcher Steuerungseingriff erforderlich ist, mithin also das aktive, zugeschaltete Fahrerassistenzsystem ein energieeffizientes Fahrmanöver aktiv durchführen soll, ohne dass der Fahrer hieran beteiligt ist, erfolgt beim erfindungsgemäßen Kraftfahrzeug 1 unabhängig davon, ob im Navigationssystem 4 ein Fahrtziel einprogrammiert ist und demzufolge eine definierte Fahrtstrecke gegeben ist. Denn das erfindungsgemäße Kraftfahrzeug respektive das Fahrerassistenzsystem 2 ist in der Lage, einen vom Fahrzeug mit hoher Wahrscheinlichkeit in Kürze zu befahrenden, also vor dem Fahrzeug liegenden Streckenabschnitt zu bestimmen, mithin also eine Vorhersage über die nächste Fahrtstreckendistanz vorzunehmen, ohne dass hierfür auch nur irgendein Fahrtziel oder eine entsprechende Information seitens des Fahrers zu geben ist.

Hierzu bedient sich die Steuerungseinrichtung 3 des Fahrerassistenzsystems 2, die über ein geeignetes Softwaremodul zur Planung eines solchen energieeffizienten Fahrmanövers verfügt, der Daten respektive Informationen verschiedener, über den Fahrzeugbus zugänglicher Systeme.

Zur Bestimmung des wahrscheinlichen prädizierten Streckenabschnitts erfolgt zunächst über das Positionsbestimmungssystem 8 eine kontinuierliche Erfassung der geografischen Fahrzeug-Ist-Position. Ist diese bekannt, so greift die Steuerungseinrichtung 3, sofern dieser Schritt von ihr vorgenommen wird, oder eine entsprechende Steuerungseinrichtung des Navigationssystems 4 auf die im Speichermittel 5 hinterlegte Streckendaten 6 zurück und ermittelt ein bestimmtes Streckensegment, in dem die Fahrzeug-Ist-Position liegt. Ausgehend von diesem Segment werden noch ein oder mehrere weitere Segmente, die dem nachfolgen, ermittelt, um auf diese Weise einen Streckenabschnitt zu generieren, der mit hoher Wahrscheinlichkeit unmittelbar nachfolgend vom Fahrzeug befahren wird. Dieser Streckenabschnitt kann eine definierte Maximallänge von beispielsweise 250 m besitzen, kann aber auch länger oder kürzer sein, je nachdem, wie das Speichervolumen gegeben ist. Ist der Streckenabschnitt bekannt, wurde also die Vorhersage getroffen, so wird seitens der Steuerungseinrichtung 3 innerhalb der im Speichermittel 5 abgelegten Streckenattribute 7 überprüft, ob dem ermittelten Streckenabschnitt irgendwelche Streckenattribute zugeordnet sind, die vom Inhalt her einer nachfolgenden Regel zugrunde zu legen sind. Solche Streckenattribute sind Geschwindigkeitsvorgaben, letztlich also Geschwindigkeitsgebotsschilder, topografische Gegebenheiten wie Gefälle oder Steigungen, oder der Fahrbahnverlauf selbst im Hinblick auf Kurven sowie deren Krümmungsradius. All dies sind Umstände respektive Situationen, die in der Regel eine Verringerung der Fahrgeschwindigkeit erfordern, die ohne Weiteres durch ein Leerlaufsegeln oder den Motorschubbetrieb, gegebenenfalls verbunden mit einem Bremseingriff, erreicht werden können.

Ist ein solches Streckenattribut ermittelt worden, beispielsweise eine Geschwindigkeitsbeschränkung auf 60 km/h, so entwickelt die Steuerungseinrichtung 3 automatisch eine Strategie, wie auf verbraucharme Weise das Fahrzeug weiter zu steuern ist, um möglichst verbrauchsarm das Geschwindigkeitsgebot an der gegebenen Stelle zu erfüllen. Hierzu wird zum einen die geografische Position des Geschwindigkeitsgebots, also des Streckenattributs, ermittelt, welche Information üblicherweise dem Streckenattribut 7 selbst zugeordnet ist, jedenfalls aber aus dem Speichermittel 5 ermittelbar ist. In Verbindung mit der kontinuierlich erfassten Ist-Position ist damit der momentane respektive sich kontinuierlich ändernde Abstand bekannt. Die Steuerungseinrichtung 3 greift des Weiteren auf zusätzliche Parameter des Fahrzeugs zurück, die im Rahmen der Entwicklung der Regelstrategie wichtig sind. Dies ist zum einen die Fahrzeug-Ist-Geschwindigkeit, da zwangsläufig zu ermitteln ist, wie stark das Fahrzeug zu verzögern ist. Diese Information wird über den Fahrzeugbus 17 abgegriffen, sie liegt fahrzeugseitig ohnehin permanent über die Geschwindigkeitserfassung vor. Darüber hinaus werden sofern erforderlich von der Motorsteuerungseinrichtung 11 respektive der Getriebesteuereinrichtung 13 relevante Informationen abgefragt (z. B. Drehzahl, Schleppmoment, Getriebestufe etc.), wie auch sonstige Fahrzeugparameter wie Luftwiderstand, Rollwiderstand etc. abgefragt werden können, soweit sie nicht bereits vorliegen.

Gestützt auf die sämtlichen vorliegenden Informationen ermittelt nun die Steuerungseinrichtung den erforderlichen Ausrollweg, daraus resultierend den Abstand respektive die Position des eigenen Fahrzeugs relativ zum Gebotsschild, an der exakt der Steuerungseingriff beispielsweise zum Umschalten in den Leerlaufsegelbetrieb oder dergleichen erfolgen muss, letztlich also der Zeitpunkt des Steuerungseingriffs. Dieser Zeitpunkt kann exakt erfasst werden, nachdem kontinuierlich die Fahrzeug-Ist-Position ermittelt wird. Da während des Eingriffs, also innerhalb der Zeitspanne zwischen Beginn des Steuerungseingriffs und Abschluss des automatischen Längsführungsbetriebs kontinuierlich sämtliche Parameter weiterhin erfasst respektive überwacht werden, ist es des Weiteren auch möglich, den Vorgang kontinuierlich zu kontrollieren, um zu erfassen, ob über das Leerlaufsegeln tatsächlich die Geschwindigkeit bis zum Gebotsschild verringert werden kann, oder ob nicht ein zusätzlicher leichter Bremseingriff erforderlich ist.

Über die Kamera 9 werden ferner kontinuierlich Bilder des Fahrzeugvorfelds ermittelt, damit zwangsläufig also auch Bilder, in denen ab einem bestimmten Zeitpunkt das Gebotsschild zu erkennen ist. Die Kamera 9 verfügt über eine geeignete Bildanalyseeinheit, die eine Verkehrszeichenerkennung durchführen kann, mithin also erkennen kann, ob und wenn ja welches Gebotsschild im Bild gezeigt ist. Hierüber kann seitens der Steuerungseinrichtung 3 eine Plausibilisierung des aus dem Speichermittel 5 ausgelesenen Streckenattributs, also des Gebotsschilds vorgenommen werden, ob also das dort hinterlegte Streckenattribut von z. B. 60 km/h auch tatsächlich im Bild gezeigt ist, und auch, ob es an der angegebenen Position steht. Es kann also eine Plausibilisierung des Streckenattributs, das im digitalen Kartenmaterial abgelegt ist, erfolgen. Hierüber ist es aber auch möglich, etwaige Streckenattribute, beispielsweise Geschwindigkeitsbegrenzungsschilder, zu erfassen, die beispielsweise nur temporär gegeben sind, wie dies üblicherweise bei nur zeitweise gegebenen Baustellen und Ähnlichem der Fall ist. Wird also über die Kamerabildanalyse erfasst, dass in einer bestimmten Entfernung (die ebenfalls aus dem Kamerabild ermittelt werden kann) eine Geschwindigkeitsbeschränkung auf 30 km/h geboten wird, so kann die Steuerungseinrichtung 3 unmittelbar eine entsprechende Regelstrategie entwickeln, um das Fahrzeug energieeffizient so zu verzögern, dass zu Beginn der Geschwindigkeitsgebotszone die angegebene Geschwindigkeit erreicht wird.

Fig. 2 zeigt eine Möglichkeit, wie der prädikative Streckenabschnitt, also der wahrscheinlichste Fahrweg, ermittelt wird. Der Erfindung liegt der Gedanke zugrunde, eine vorausschauende Längsregelung durch Nutzung verbrauchseffizienter Fahrmanöver auf Basis eines solchen vorhergesagten, jedoch nicht über eine Navigationseingabe definierten Fahrwegs zu ermöglichen. Zur Generierung des Voraussagehorizonts, also des Streckenabschnitts, wird unter Nutzung der Fahrzeug-Ist-Positionsinformationen zunächst das Segment 18a innerhalb der Streckendaten 6, also der digitalen Karte, ermittelt, auf dem sich das Kraftfahrzeug 1 aktuell befindet. Sodann werden weitere Folgesegmente 18b, 18c, 18d ermittelt und quasi "aneinandergehängt", um den prädiktiven Streckenabschnitt 19 zu bestimmen, der in Fig. 2 mit der dickeren Linie angegeben ist. D. h., dass der wahrscheinliche Fahrweg über einen prädiktiven Baum ermittelt wird.

Wie Fig. 2 zeigt, sind grundsätzlich im gezeigten Ausführungsbeispiel wenigstens zwei unterschiedliche Pfade denkbar, nämlich zum einen der hier als Streckenabschnitt 19 eingezeichnete Fahrweg, zum anderen ein weiterer Fahrweg, bei dem jedoch im Bereich des Streckenabschnitts 18c' eine Fahrspur abzweigt, die über die Streckenabschnitte 18d' und 18e' fortgesetzt wird und sich nachfolgend nochmals verzweigt. Die Steuerungseinrichtung 3 muss nun also aus den gegebenen Möglichkeiten den Pfad wählen, der am wahrscheinlichsten vom Kraftfahrzeug 1 befahren wird. Hierzu ist zum einen eine Segmentierung vorgesehen, d. h., dass die jeweilige Fahrbahn in die in Fig. 2 gezeigten Segmente 18a,... unterteilt ist. Die Länge der Segmente ist variabel, als Segmenttrenner dienen wiederum Streckenattribute wie Geschwindigkeitsbeschränkungen, Straßenklasse sowie Änderungen in der Krümmungsinformation zwei aufeinanderfolgender Segmente. Es wird nun seitens der Steuerungseinrichtung 3 eine Priorisierung möglicher Routen über die Streckenattribute "Straßenklasse" (hier wird z. B. unterschieden zwischen Autobahn, Kraftfahrstraße, Landstraße oder Ortsstraße), "Vorfahrtsstraße" sowie über den Abzweigewinkel zwischen zwei Segmenten, hier beispielsweise den Segmenten 18c und 18c'. Dabei wird davon ausgegangen, dass der Fahrer mit hoher Wahrscheinlichkeit auf Vorfahrtsstraßen fahren wird bzw. eine Fahrt mit kleinem Abzweigewinkel bevorzugt, welcher mit höherer Geschwindigkeit durchfahren werden kann, als ein Segment, das einen größeren Abzweigewinkel aufweist. Im gezeigten Beispiel sei angenommen, dass es sich bei der Strecke definiert über die Segmente 18a - 18d um eine Autobahn handelt, während das Segment 18c' eine Autobahnabfahrt einleitet. Hier kann also eine Priorisierung allein über das Streckenattribut "Straßenklasse" erfolgen, wie natürlich auch über den Anzweigewinkel respektive die Krümmung, die am Ende des Segments 18c' gegeben ist. Alle diese Streckenattribute sind seitens der Steuerungseinrichtung 3 bekannt.

Ist nun der Streckenabschnitt 19 bestimmt, so kann überprüft werden, ob etwaige regelungswerte Straßenattribute im Streckenabschnitt vorhanden sind. Beispielsweise könnte am Ende des Segments 18a eine Geschwindigkeitsbeschränkung im Hinblick auf die anstehende Ausfahrt gegeben sein, die allgemein gilt. Dies wird seitens der Steuerungseinrichtung 3 erfasst, die entsprechende Steuerung der eingebundenen Aktoren kann daraufhin dann erfolgen.

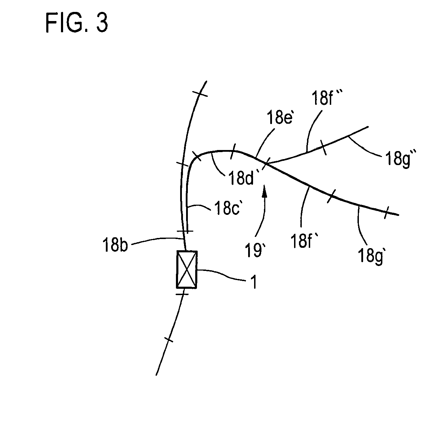

Fig. 3 zeigt eine Prinzipdarstellung zur Erläuterung einer Änderung eines zuvor bestimmten Streckenabschnitts. Ausgehend von Fig. 2 sei angenommen, dass zunächst der Streckenabschnitt 19 bestimmt wurde. Der Fahrer betätigt nun beispielsweise in der in Fig. 3 gezeigten Fahrzeugposition den Blinker, um anzuzeigen, dass er von der Autobahn abfahren möchte. D. h. dass die Steuerungseinrichtung 3 nunmehr sofort einen neuen Streckenabschnitt 19' bestimmt, wiederum ausgehend von der erfassten Fahrzeug-Ist-Position und einer Ermittlung des momentanen Streckenabschnitts, in dem sich das Fahrzeug befindet, hier also des Segments 18b. Der Streckenabschnitt 19 bestimmt sich sodann weiter über die Segmente 18c', 18d', 18e'. Am Ende des Segments 18e' findet wiederum eine Abzweigung statt, auch hier erfolgt wiederum eine Priorisierung dahingehend, dass sich beispielsweise bei den folgenden Segmenten 18f' und 18g' um die Fortsetzung einer Landstraße, also eine gleichbleibende Straßenklasse, handelt, während beispielsweise die Segmente 18f" und 18g" eine untergeordnete Straßenklasse darstellen, oder es erfolgt eine Priorisierung über den Abzweigewinkel zwischen dem Segment 18e' und 18f" und Ähnliches. Eine erneute Neuberechnung würde erfolgen, wenn der Fahrer beispielsweise die im Segment 18e' den Blinker nach links betätigt, um auf das Segment 18f" abzubiegen.

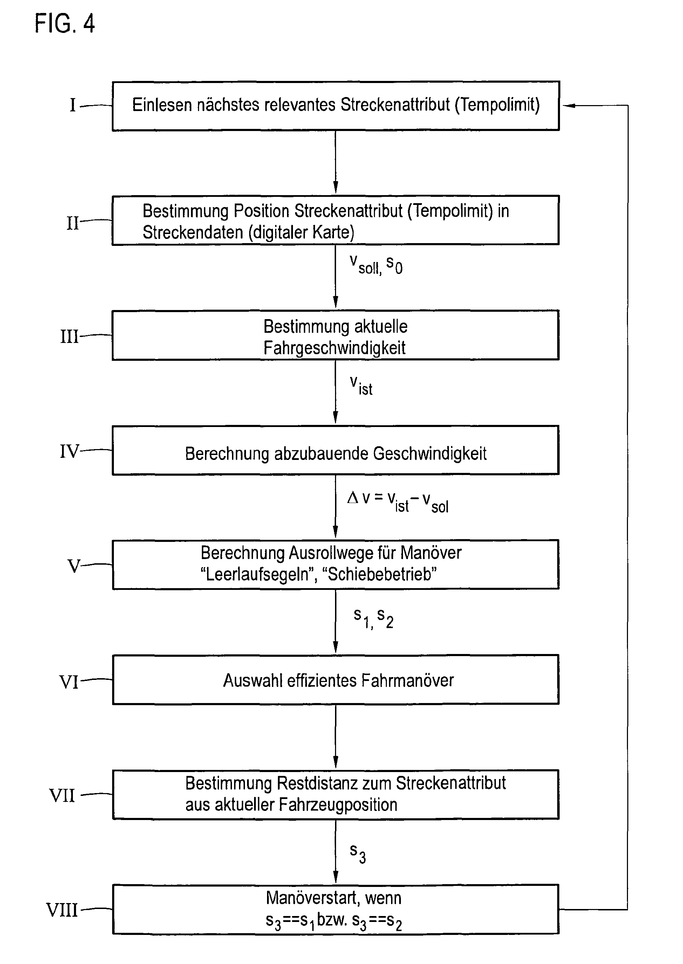

Fig. 4 stellt ein Ablaufdiagramm des Berechnungsalgorithmus am Beispiel eines vorausliegenden Streckenabschnitts mit Geschwindigkeitsbeschränkung dar. Daher wird zunächst in Schritt 1 ein nächstes, relevantes Streckenattribut als Regelobjekt eingelesen, im gezeigten Beispiel sei angenommen, dass es sich hierbei um ein Verkehrschild mit einem Tempolimit handelt. Das Streckenattribut wird aus der entsprechenden die Attribute 7 enthaltenden Datei des Navigationssystems 4 eingelesen. Sodann wird seine geografische Position aus den Streckendaten 6, also der digitalen Karte, gemäß Schritt II bestimmt. Damit liegen seitens der Steuerungseinrichtung 3 bereits die Informationen über das Tempolimit (vₛₒₗₗ) sowie seine Position (s₀) vor.

Im Schritt III wird sodann die aktuelle Fahrgeschwindigkeit vᵢₛₜ bestimmt, wonach im Schritt IV die Berechnung der abzubauenden Geschwindigkeit zu Δv=vᵢₛₜ-vₛₒₗₗ bestimmt wird. Diese Geschwindigkeitsdifferenz Δv ist die Grundlage für die Berechnung der Ausrollstrecke, also der Distanz zwischen dem Startpunkt des automatisierten Fahrmanövers und der Position des Tempolimits in der digitalen Karte im Leerlauf bzw. im Motor-Schiebebetrieb, wobei beispielsweise die Ausrollwege sowohl für das Leerlaufsegeln, wo also keine Motorbremsung erfolgt, also auch für den Motorschiebebetrieb erfolgen kann. Es werden wiederum zwei Distanzwerte ermittelt, nämlich der Distanzwert s₁ als Ausrolldistanz für den Schiebebetrieb, und die Ausrolldistanz s₂ für den Leerlaufsegelbetrieb.

Im Schritt VI wird sodann eine Auswahl des effizienten Fahrmanövers vorgenommen, d. h., die Steuerungseinrichtung 3 bestimmt, ob entweder im Leerlauf gesegelt werden soll, oder ob die Bremsung über den Motorschiebebetrieb erfolgen soll. Dies hängt letztlich auch davon ab, wie die Restdistanz des eigenen Fahrzeugs zum Streckenattribut ist, die im Schritt VII bestimmt wird. Der Restdistanzwert ist mit s₃ angegeben.

Im Schritt VIII beginnt sodann der Start des Manövers, wenn nämlich s₃==s₁ oder s₃==s₂, je nachdem, welches Manöver ausgewählt wurde.

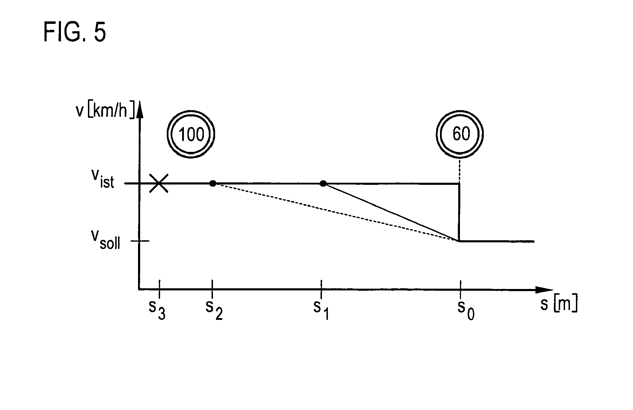

Fig. 5 zeigt schließlich ein Diagramm, das, ausgehend von einer gegebenen Ist-Geschwindigkeit von 100 km/h, den Regelungsvorgang und den Ablauf darstellt, um auf eine Gebotsgeschwindigkeit von 60 km/h zu gelangen.

## Patentansprüche

1. Kraftfahrzeug, umfassend ein Fahrerassistenzsystem (2) mit einer Steuerungseinrichtung (3) zur automatischen Längsführung des Kraftfahrzeugs (1), ein Navigationssystem (4) umfassend ein Speichermittel (5) mit Streckendaten (6) und Streckenattributen (7), ein Positionsbestimmungssystem (8) zur Ermittlung der geografischen Fahrzeugposition, sowie einen oder mehrere fahrzeugseitig vorgesehene Aktuatoren, die über die Steuerungseinrichtung (3) im Rahmen der Längsführung direkt oder indirekt ansteuerbar sind,
**dadurch gekennzeichnet,**
**dass** die Steuerungseinrichtung (3) zur prädikativen Ermittlung eines vor dem Kraftfahrzeug (1) liegenden Streckenabschnitts (19), der vom Kraftfahrzeug (19) wahrscheinlich befahren wird, anhand der ermittelten momentanen Fahrzeugposition und positionsabhängig bestimmten Streckendaten (6) und zur Steuerung eines oder mehrerer Aktuatoren in Abhängigkeit wenigstens eines dem ermittelten Streckenabschnitt (19) zugeordneten, in seiner geografischen Position erfassbaren Streckenattribut (7) ausgebildet ist, wobei bei Vorliegen mehrerer möglicher verschiedener Streckenabschnitte (19) die Steuereinrichtung (3) zur Priorisierung der Streckenabschnitte (19) ausgebildet ist.

2. Kraftfahrzeug nach Anspruch 1,
**dadurch gekennzeichnet,**
**dass** ein der Steuerung zugrunde legbares Streckenattribut (7) eine Geschwindigkeitsvorgabe, eine Fahrbahnkurve und deren Krümmungsverlauf, und/oder eine topografische Fahrbahninformation ist.

3. Kraftfahrzeug nach Anspruch 1 oder 2,
**dadurch gekennzeichnet,**
**dass** die Steuerungseinrichtung (3) zur Steuerung des oder der Aktuatoren unter Berücksichtigung wenigstens eines aktuellen Betriebsparameters des Kraftfahrzeugs (1) ausgebildet ist.

4. Kraftfahrzeug nach einem der vorangehenden Ansprüche,
**dadurch gekennzeichnet,**
**dass** eine Kamera (9) und/oder ein oder mehrere Bereichssensoren, insbesondere Radarsensoren vorgesehen sind, wobei die Steuerungseinrichtung (3) zur Plausibilisierung der erfassten geografischen Position eines der Steuerung zu Grunde zu legenden Streckenattributs (7) und/oder Plausibilisierung des Streckenattributs (7) selbst und/oder der Erfassung eines weiteren Streckenattributs (7) anhand der von der Kamera (9) gelieferten Bilder und/oder der von dem oder den Bereichssensoren gelieferten Informationen ausgebildet ist.

5. Kraftfahrzeug nach einem der vorangehenden Ansprüche,
**dadurch gekennzeichnet,**
**dass** die Steuerungseinrichtung (3) bei Ermittlung einer anstehenden Geschwindigkeitsverringerung oder eines Gefälles zur Bestimmung einer Ausrolldistanz und zur Ermittlung des Zeitpunkts des Beginns des Steuerungseingriffs ausgebildet ist.

6. Kraftfahrzeug nach einem der vorangehenden Ansprüche,
**dadurch gekennzeichnet,**
**dass** die maximale Länge eines ermittelbaren Streckenabschnitts (19) vorgegeben ist.

7. Verfahren zur Längsführung eines Kraftfahrzeugs (1) umfassend ein Fahrerassistenzsystem (2) mit einer Steuerungseinrichtung (3) zur automatischen Längsführung des Kraftfahrzeugs (1), ein Navigationssystem (4) umfassend ein Speichermittel (5) mit Streckendaten (6) und Streckenattributen (7), ein Positionsbestimmungssystem (8) zur Ermittlung der geografischen Fahrzeugposition, sowie einen oder mehrere fahrzeugseitig vorgesehene Aktuatoren (10, 12, 16), die über die Steuerungseinrichtung (3) im Rahmen der Längsführung direkt oder indirekt ansteuerbar sind, mit folgenden Schritten:
- Ermittlung der momentanen geografischen Fahrzeugposition,
- Ermittlung von Streckendaten (6) in Abhängigkeit der Fahrzeugposition,
- Ermittlung eines wahrscheinlich befahrenen Streckenabschnitts (19) anhand der Fahrzeugposition und der Streckendaten (6), wobei bei Vorliegen mehrerer möglicher verschiedener Streckenabschnitte (19) die Steuereinrichtung (3) zur Priorisierung der Streckenabschnitte (19) ausgebildet ist,
- Ermittlung wenigstens eines dem Streckenabschnitt (19) zugeordneten Streckenattributs (7) sowie dessen geografischer Position in den Streckendaten (6), und
- Steuerung wenigstens eines Aktuators in Abhängigkeit des Informationsgehalts des Streckenattributs (7).

8. Verfahren nach Anspruch 7,
**dadurch gekennzeichnet,**
**dass** als ein der Steuerung zugrunde zu legendes Streckenattribut (7) eine Geschwindigkeitsvorgabe, eine Fahrbahnkurve und deren Krümmungsverlauf, und/oder eine topografische Fahrbahninformation ermittelt wird.

9. Verfahren nach Anspruch 7 oder 8,
**dadurch gekennzeichnet,**
**dass** die Steuerungseinrichtung (3) zur Steuerung des oder der Aktuatoren wenigstens einen aktuellen Betriebsparameter des Kraftfahrzeugs berücksichtigt.

10. Verfahren nach einem der Ansprüche 7 bis 9,
**dadurch gekennzeichnet,**
**dass** mittels einer fahrzeugseitig vorgesehenen Kamera (9) kontinuierlich Bilder des Fahrzeugvorfelds aufgenommen werden, und/oder dass mittels eines oder mehrere fahrzeugseitig vorgesehener Bereichssensoren, insbesondere Radarsensoren Informationen aus dem Fahrzeugvorfeld aufgenommen werden, wobei die Steuerungseinrichtung (3) eine Plausibilisierung der erfassten geografischen Position eines der Steuerung zu Grunde zu legenden Streckenattributs (7) und/oder des Streckenattributs (7) selbst anhand der Bilder und/oder Informationen vornimmt.

11. Verfahren nach einem der Ansprüche 7 bis 10,
**dadurch gekennzeichnet,**
**dass** bei Ermittlung eines nicht im Speichermedium abgelegten Streckenattributs (7) durch Auswertung der Kamerabilder und/oder der Sensorsignale, gegebenenfalls nach Durchführung einer Plausibilisierungsprüfung anhand bekannter Streckendaten (6) und/oder Streckenattributen (7), die Steuerung in Abhängigkeit des neu erfassten Streckenattributs (7) erfolgt.

12. Verfahren nach einem der Ansprüche 7 bis 11,
**dadurch gekennzeichnet,**
**dass** zur Ermittlung des Streckenabschnitts (19) zunächst innerhalb der in Streckensegmente unterteilten Streckendaten (6) anhand der erfassten momentanen Fahrzeugposition das Streckensegment ermittelt wird, in dem sich das Fahrzeug momentan befindet, wonach nachfolgende Streckensegmente unter Berücksichtigung von Informationen betreffend den Streckenverlauf oder von Streckenattributen (7) ermittelt und zu einem Streckenabschnitt (19) verbunden werden.

13. Verfahren nach einem der Ansprüche 7 bis 12,
**dadurch gekennzeichnet,**
**dass** die Steuerungseinrichtung (3) bei Ermittlung einer anstehenden Geschwindigkeitsverringerung oder eines Gefälles eine Ausrolldistanz und den Zeitpunkt des Beginns des Steuerungseingriffs ermittelt.

## Claims

1. Motor vehicle comprising a driver assistance system (2) having a control device (3) for the automatic longitudinal guidance of the motor vehicle (1), a navigation system (4) comprising a storage means (5) having route data (6) and route attributes (7), a positioning system (8) for determining the geographical vehicle position, and one or more vehicle-side actuators which can be directly or indirectly controlled via the control device (3) within the context of longitudinal guidance,
**characterised in that**
the control device (3) is configured to predictively determine a route portion (19) which is in front of the motor vehicle (1) and along which the motor vehicle (19) is likely to drive on the basis of the determined current vehicle position and
route data (6) which are identified in a position-dependent manner and to control one or more actuators depending on at least one route attribute (7) which is assigned to the determined route portion (19) and of which the geographical position can be detected, the control device (3) being configured to prioritise the route portions (19) when there are a plurality of different possible route portions (19).

2. Motor vehicle according to claim 1, **characterised in that** a route attribute (7) which can be taken as a basis for the control is a speed limit, a bend in the lane and the curvature thereof and/or topographical lane information.

3. Motor vehicle according to either claim 1 or claim 2, **characterised in that** the control device (3) is configured to control the actuator(s), taking into account at least one current operating parameter of the motor vehicle (1).

4. Motor vehicle according to any of the preceding claims, **characterised in that** a camera (9) and/or one or more region sensors, in particular radar sensors, are provided, the control device (3) being configured to check the plausibility of the detected geographical position of a route attribute (7) that is to be taken as a basis for the control and/or to check the plausibility of the route attribute (7) itself and/or to detect an additional route attribute (7) on the basis of images provided by the camera (9) and/or information provided by the region sensor(s).

5. Motor vehicle according to any of the preceding claims, **characterised in that**, when determining an upcoming speed reduction or a descent, the control device (3) is configured to identify a stopping distance and to determine the point in time of the start of the control intervention.

6. Motor vehicle according to any of the preceding claims, **characterised in that** the maximum length of a determinable route portion (19) is predefined.

7. Method for the longitudinal guidance of a motor vehicle (1) comprising a driver assistance system (2) having a control device (3) for automatic longitudinal guidance of the motor vehicle (1), a navigation system (4) comprising a storage means (5) having route data (6) and route attributes (7), a positioning system (8) for determining the geographical vehicle position, and one or more vehicle-side actuators (10, 12, 16) which can be directly or indirectly controlled via the control device (3) within the context of longitudinal guidance, comprising the steps of:
- determining the current geographical vehicle position,
- determining route data (6) depending on the vehicle position,
- determining a route portion (19) along which the vehicle is likely to drive on the basis of the vehicle position and the route data (6), the control device (3) being configured to prioritise the route portions (19) when there are a plurality of different possible route portions (19),
- determining at least one route attribute (7) assigned to the route portion (19) and the geographical position of said attribute in the route data (6), and
- controlling at least one actuator depending on the information content of the route attribute (7).

8. Method according to claim 7, **characterised in that** a speed limit, a bend in the lane and the curvature thereof and/or topographical lane information is determined as a route attribute (7) which is to be taken as a basis for the control.

9. Method according to either claim 7 or claim 8, **characterised in that** the control device (3) takes into account at least one current operating parameter of the motor vehicle for controlling the actuator(s).

10. Method according to any of claims 7 to 9, **characterised in that** images of the region in front of the vehicle are continuously taken by means of a vehicle-side camera (9) and/or **in that** information is gathered from the region in front of the vehicle by means of one or more vehicle-side region sensors, in particular radar sensors, the control device (3) checking the plausibility of the detected geographical position of a route attribute (7) which is to be taken as a basis for the control and/or of the route attribute (7) itself on the basis of the images and/or information.

11. Method according to any of claims 7 to 10, **characterised in that**, when determining a route attribute (7) which is not stored in the storage medium by evaluating the camera images and/or the sensor signals, optionally after carrying out a plausibility check on the basis of known route data (6) and/or route attributes (7), the control takes place depending on the newly detected route attribute (7).

12. Method according to any of claims 7 to 11, **characterised in that**, for determining the route portion (19), within the route data (6) which is divided into route segments, the route segment in which the vehicle is currently located is first determined on the basis of the detected current vehicle position, following which subsequent route segments are determined by taking into account information relating to the course of the route or by taking into account route attributes (7) and are associated with a route portion (19).

13. Method according to any of claims 7 to 12, **characterised in that**, when determining an upcoming speed reduction or a descent, the control device (3) determines a stopping distance and the point in time of the start of the control intervention.

## Revendications

1. Véhicule automobile, comprenant un système (2) d'assistance au conducteur avec un dispositif de commande (3) pour le guidage longitudinal automatique du véhicule automobile (1), un système de navigation (4) comprenant un moyen de mémorisation (5) avec des données de trajet (6) et avec des attributs de trajet (7), un système de détermination de position (8) pour la détermination de la position géographique du véhicule ainsi qu'un ou plusieurs actionneurs qui sont prévus au niveau du véhicule et qui peuvent être commandés directement ou indirectement par l'intermédiaire du dispositif de commande (3) dans le cadre du guidage longitudinal,
**caractérisé en ce que** le dispositif de commande (3) est conçu pour déterminer de manière prédictive un tronçon de trajet (19), qui se trouve devant le véhicule automobile (1) et qui sera probablement parcouru par le véhicule automobile (19), à l'aide de la position de véhicule momentanée déterminée et de données de trajet (6) déterminées en fonction de la position et pour commander un ou plusieurs actionneurs en fonction d'au moins un attribut de trajet (7) associé au tronçon de trajet déterminé (19) et dont la position géographique peut être détectée, le dispositif de commande (3) étant conçu pour classer par ordre de priorité les tronçons de trajet (19) s'il existe plusieurs tronçons de trajet (19) différents possibles.

2. Véhicule automobile selon la revendication 1, **caractérisé en ce qu'**un attribut de trajet (7) pouvant être à la base de la commande est une prescription de vitesse, une courbe de voie de circulation et l'allure de sa courbure et/ou une information topographique de voie de circulation.

3. Véhicule automobile selon la revendication 1 ou 2, **caractérisé en ce que** le dispositif de commande (3) est conçu pour commander le ou les actionneurs en tenant compte d'au moins un paramètre de fonctionnement actuel du véhicule automobile (1).

4. Véhicule automobile selon l'une des revendications précédentes, **caractérisé en ce qu'**il est prévu une caméra (9) et/ou un ou plusieurs capteurs de zone, notamment des capteurs radars, le dispositif de commande (3) étant conçu pour vérifier la vraisemblance de la position géographique détectée d'un attribut de trajet (7) pouvant être à la base de la commande et/ou pour vérifier la vraisemblance de l'attribut de trajet (7) lui-même et/ou de la détection d'un autre attribut de trajet (7) à l'aide des images fournies par la caméra (9) et/ou des informations fournies par le ou les capteurs de zone.

5. Véhicule automobile selon l'une des revendications précédentes, **caractérisé en ce que**, lors de la détermination d'une réduction de vitesse à venir ou d'une pente, le dispositif de commande (3) est conçu pour déterminer une distance d'avance par inertie et pour déterminer l'instant du début de l'intervention de commande.

6. Véhicule automobile selon l'une des revendications précédentes, **caractérisé en ce que** la longueur maximale d'un tronçon de trajet (19) pouvant être déterminé est prescrite.

7. Procédé pour le guidage longitudinal d'un véhicule automobile (1) comprenant un système (2) d'assistance au conducteur avec un dispositif de commande (3) pour le guidage longitudinal automatique du véhicule automobile (1), un système de navigation (4) comprenant un moyen de mémorisation (5) avec des données de trajet (6) et avec des attributs de trajet (7), un système de détermination de position (8) pour la détermination de la position géographique du véhicule ainsi qu'un ou plusieurs actionneurs (10, 12, 16) qui sont prévus au niveau du véhicule et qui peuvent être commandés directement ou indirectement par l'intermédiaire du dispositif de commande (3) dans le cadre du guidage longitudinal, lequel procédé comprend les étapes suivantes :
- déterminer la position géographique momentanée du véhicule,
- déterminer des données de trajet (6) en fonction de la position de véhicule,
- déterminer un tronçon de trajet (19) probablement parcouru à l'aide de la position de véhicule et des données de trajet (6), le dispositif de commande (3) étant conçu pour classer par ordre de priorité les tronçons de trajet (19) s'il existe plusieurs tronçons de trajet (19) différents possibles,
- déterminer au moins un attribut de trajet (7) associé au tronçon de trajet (19) ainsi que sa position géographique dans les données de trajet (6), et
- commander au moins un actionneur en fonction du contenu d'information de l'attribut de trajet (7).

8. Procédé selon la revendication 7, **caractérisé en ce que** l'on détermine comme attribut de trajet (7) devant être à la base de la commande une prescription de vitesse, une courbe de voie de circulation et l'allure de sa courbure et/ou une information topographique de voie de circulation.

9. Procédé selon la revendication 7 ou 8, **caractérisé en ce que**, pour la commande du ou des actionneurs, le dispositif de commande (3) prend en compte au moins un paramètre de fonctionnement actuel du véhicule automobile.

10. Procédé selon l'une des revendications 7 à 9, **caractérisé en ce que** des images de l'environnement devant le véhicule sont enregistrées en continu au moyen d'une caméra (9) prévue au niveau du véhicule et/ou **en ce que** des informations provenant de l'environnement devant le véhicule sont enregistrées au moyen d'un ou plusieurs capteurs de zone, notamment des capteurs radars, prévus au niveau du véhicule, le dispositif de commande (3) effectuant une vérification de vraisemblance de la position géographique détectée d'un attribut de trajet (7) devant être à la base de la commande et/ou de l'attribut de trajet (7) lui-même à l'aide des images et/ou des informations.

11. Procédé selon l'une des revendications 7 à 10, **caractérisé en ce que**, lors de la détermination d'un attribut de trajet (7) non enregistré dans le moyen de mémorisation suite à l'évaluation des images de caméra et/ou des signaux de capteurs, le cas échéant après vérification de vraisemblance à l'aide de données de trajet (6) connues et/ou d'attributs de trajet (7) connus, la commande s'effectue en fonction de l'attribut de trajet (7) nouvellement détecté.

12. Procédé selon l'une des revendications 7 à 11, **caractérisé en ce que**, pour la détermination du tronçon de trajet (19), on détermine d'abord parmi les données de trajet (6) divisées en segments de trajet, à l'aide de la position de véhicule momentanée détectée, le segment de trajet dans lequel le véhicule se trouve momentanément, les segments de trajet suivants étant alors déterminés en tenant compte d'informations concernant l'allure de trajet ou. en tenant compte d'attributs de trajet (7) et étant reliés pour former un tronçon de trajet (19).

13. Procédé selon l'une des revendications 7 à 12, **caractérisé en ce que**, lors de la détermination d'une réduction de vitesse à venir ou d'une pente, le dispositif de commande (3) détermine une distance d'avance par inertie et l'instant du début de l'intervention de commande.
